# EUROPÄISCHE PATENTSCHRIFT

(11) **EP 2 699 457 B1**
(45) Veröffentlichungstag und Bekanntmachung des Hinweises auf die Patenterteilung: **08.06.2016**
(21) Anmeldenummer: 12714658.7
(22) Anmeldetag: 05.04.2012
(51) Int. Cl.: B60T 7/22

(54) **VERFAHREN ZUM ERHÖHEN DER SICHERHEIT BEIM BETRIEB EINES FAHRZEUGS, VORRICHTUNG ZUR DURCHFÜHRUNG EINES SOLCHEN VERFAHRENS UND FAHRZEUG AUFWEISEND EINE SOLCHE VORRICHTUNG**
METHOD FOR INCREASING SAFETY WHEN OPERATING A VEHICLE, DEVICE FOR CARRYING OUT SUCH A METHOD, AND VEHICLE COMPRISING SUCH A DEVICE
PROCÀDÉ POUR AUGMENTER LA SÉCURITÉ LORS DU FONCTIONNEMENT D'UN VÉHICULE, DISPOSITIF POUR EXÉCUTER UN TEL PROCÉDÉ ET VÉHICULE PRÉSENTANT UN TEL DISPOSITIF

(30) Priorität: 20.04.2011 DE 102011007775
(43) Veröffentlichungstag der Anmeldung: 26.02.2014
(73) Patentinhaber: Robert Bosch GmbH, 70442 Stuttgart (DE)
(72) Erfinder: FRIEDRICH, Jannik, 70806 Kornwestheim (DE); SCHNEIDER, Marcus, 71642 Ludwigsburg (DE)
(86) Internationale Anmeldenummer: PCT/EP2012/056297
(87) Internationale Veröffentlichungsnummer: WO 2012/143249

(56) Entgegenhaltungen:
- EP-A1- 1 470 977
- DE-A1- 10 258 617
- DE-A1- 10 335 738
- DE-A1-102010 026 762
- DE-A1-102010 033 008

## Beschreibung

Die vorliegende Erfindung betrifft ein Verfahren zum Erhöhen der Sicherheit beim Betrieb eines Fahrzeugs, eine Vorrichtung zur Ausführung eines solchen Verfahrens sowie ein Fahrzeug aufweisend eine solche Vorrichtung.

### STAND DER TECHNIK

Es ist bereits bekannt, dass zur Erhöhung der Sicherheit beim Betrieb eines Fahrzeugs dieses mit Bremsassistenzsystemen ausgestattet ist. Solche Bremsassistenzsysteme dienen dazu unterschiedliche Bremssituationen eines Fahrzeugs wahrzunehmen und zu verbessern. Zum Beispiel werden solche Bremsassistenzsysteme dafür verwendet, dass vorbestimmte Abstände zu vorausfahrenden Fahrzeugen eingehalten werden. Verringert das vorausfahrende Fahrzeug die Geschwindigkeit und würde sich dementsprechend der Abstand zwischen den beiden Fahrzeugen ebenfalls verringern, so wird ein automatischer Bremseingriff durchgeführt, um den Abstand zu halten oder wieder herzustellen. Auch ist es bekannt in Notbremssituationen die vom Fahrer eingeleitete Bremsaktion zu unterstützen, beziehungsweise automatisch eine Notbremsung durchzuführen, wenn eine Sensorik eine potentielle Kollision mit einem vorausfahrenden Fahrzeug erkennt. Das kann bis zum Stillstand des Fahrzeugs führen, sodass ein gesamter Nothaltevorgang durch einen automatischen Bremseingriff durch bekannte Bremsassistenzsysteme erzielt werden kann.

So ist aus der DE 103 35 738 A1 ein Verfahren zur Unterstützung des Fahrers eines Fahrzeugs bei der Durchführung eines Notbremsvorgangs bekannt, bei dem zur Abbremsung des Fahrzeugs vorgesehene Bremsmittel dann fahrerunabhängig angesteuert werden, wenn eine vorgegebene Notbremsbedingung erfüllt ist und wenn festgestellt wird, dass ein Fahrerwunsch auf Durchführung des Notbremsvorgangs vorliegt. Bei erfüllter Notbremsbedingung wird eine Notbremsinformation an den Fahrer des Fahrzeugs ausgegeben. Auch bei nicht erfüllter Notbremsbedingung wird eine angepasste Fahrerinformation ausgegeben, die den Fahrer des Fahrzeugs über die derzeitige Umgebungs- bzw. Verkehrssituation im Erfassungsbereich informiert. Durch geeignete Wahl der Informationsbedingungen und der jeweils zugehörigen Fahrerinformationen können dem Fahrer Hinweise über die Relevanz von erfassten Objekten in der Umgebung des Fahrzeugs gegeben werden, sodass er seine Fahrweise an die derzeitige Umgebungs- bzw. Verkehrssituation anzupassen hat, um dem Eintreten einer unmittelbaren Auffahrgefahr vorbeugend entgegenwirken zu können.

Nachteilig bei den bekannten Verfahren und bei den bekannten Vorrichtungen ist es, dass die automatischen Bremseingriffe ohne vollständige Kontrolle durch den Fahrer erfolgen. Insbesondere im Fall von Nothaltesituationen, also bei Vollbremsungen des Fahrzeugs durch einen automatischen Bremseingriff, wird der Fahrzeugführer einem außerordentlichen Stress ausgesetzt. Ist der Nothaltevorgang durch den automatischen Bremseingriff beendet, so wird der Fahrer des Fahrzeugs immer noch einem erhöhten Stress ausgesetzt sein, beziehungsweise in Einzelfällen sogar unter Schock stehen. Problematisch in solchen Situationen ist es, dass zu diesem Zeitpunkt der automatische Bremseingriff bereits beendet ist. Das bedeutet, dass die automatische Bremswirkung gelöst ist und das Fahrzeug für den Betrieb wieder freigegeben ist, obwohl der Fahrer sich möglicherweise noch nicht in einem Zustand befindet, der ihm das zuverlässige Führen des Fahrzeugs erlaubt. Das bedeutet zum Beispiel, dass ein Fahrzeug, was durch einen automatischen Bremseingriff zum Stillstand gekommen ist, wieder zu rollen beginnt, da es entweder durch das Schleppmoment eines Automatikgetriebes oder aber durch ein Gefälle wieder Fahrt aufnimmt. Dies kann zur Folge haben, dass eine Bewegung des Fahrzeugs durchgeführt wird, obwohl der Fahrer mit dieser Bewegung nicht rechnet und/oder er diese Bewegung noch nicht voll unter Kontrolle hat. Befindet sich das Fahrzeug in einer solchen Nothaltesituation nach dem automatischen Bremseingriff im Stillstand, so kann zum Beispiel ein Stauende vorliegen. Ist der Fahrer zu diesem Zeitpunkt noch nicht wieder in der vollständigen Kontrolle des Fahrzeugs, so würde das wieder in Bewegung setzen des Fahrzeugs zwangsläufig zur Kollision mit dem voranstehenden Fahrzeug des Stauendes führen.

### OFFENBARUNG DER ERFINDUNG

Es ist Aufgabe der vorliegenden Erfindung, die voranstehend genannten Nachteile bekannter Verfahren und Vorrichtungen zum Erhöhen der Sicherheit beim Betrieb von Fahrzeugen zu beheben. Insbesondere ist es Aufgabe der vorliegenden Erfindung ein derartiges Verfahren, eine Vorrichtung zur Ausführung des derartigen Verfahrens und ein Fahrzeug aufweisend eine solche Vorrichtung zur Verfügung zu stellen, mit deren Hilfe die Kollision mit einem voranfahrenden oder voranstehenden Objekt, wie zum Beispiel einem Fahrzeug, nach der Durchführung eines automatischen Bremseingriffes reduziert ist. Insbesondere soll die Sicherheit beim Betrieb des Fahrzeugs erhöht werden.

Gelöst wird die voranstehende Aufgabe durch ein Verfahren mit den Merkmalen des unabhängigen Anspruchs 1, eine Vorrichtung mit den Merkmalen des unabhängigen Anspruchs 8 und ein Fahrzeug mit den Merkmalen des unabhängigen Anspruchs 10. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Vorrichtung und dem erfindungsgemäßen Fahrzeug und jeweils umgekehrt, sodass bezüglich der Offenbarung zu den einzelnen Erfindungsaspekten stets wechselseitig Bezug genommen wird beziehungsweise werden kann.

Ein erfindungsgemäßes Verfahren dient zum Erhöhen der Sicherheit beim Betrieb eines Fahrzeugs nach einem automatischen Bremseingriff. Es zeichnet sich durch die folgenden Schritte aus:
- Erkennen der Durchführung eines automatischen Bremseingriffs,
- Erkennen der Beendigung des automatischen Bremseingriffs, und
- Verändern der Betriebsparameter eines Parkhilfesystems des Fahrzeugs, um unter der Nutzung der Parkhilfewarnung eine nachfolgende Kollision mit einem Objekt zu vermeiden.

Unter dem Schritt des Veränderns der Betriebsparameter eines Parkhilfesystems ist dabei im Rahmen der vorliegenden Erfindung insbesondere Folgendes zu verstehen. Es ist möglich, dass die Betriebsparameter eines Parkhilfesystems dahingehend verändert werden, dass sofort nach der Beendigung des automatischen Bremseingriffs, also nach dem Lösen der automatischen Bremse, ein Warnton, also die Parkhilfewarnung des Parkhilfesystems ertönt. Ebenfalls ist es möglich, dass die Betriebsparameter eines Parkhilfesystems dahingehend verändert werden, dass eine sogenannte "Hab Acht Stellung" des Parkhilfesystems eingenommen wird. Mit anderen Worten wird das Parkhilfesystem eingeschaltet und überwacht aktiv mit dem ihm zugeordneten Sensorsystem die Umgebung des Fahrzeugs. Auch kann unter dem Verändern der Betriebsparameter eines Parkhilfesystems erfindungsgemäß verstanden werden, dass die einzelnen Warnabstände des Parkhilfesystems vergrößert werden. So würde auch bei größerer Entfernung zu einem Objekt, als dies im normalen Parkvorgang der Fall ist, eine Warnung durch das Parkhilfesystem ausgegeben werden. Das Parkhilfesystem für die Durchführung eines Parkvorgangs ist in bekannter Weise ausgeführt und verfügt zum Beispiel über Ultraschallsensoren als Abstandsmessmethode.

Durch das Verändern der Betriebsparameter eines Parkhilfesystems gelingt es insbesondere zwei Vorteile zu erzielen. Zum einen kann auf diese Weise eine Warnung des Fahrzeugführers erfolgen, dass der automatische Bremseingriff beendet ist. Er wird darüber, zum Beispiel durch einen Warnton informiert, dass das automatische Bremssystem nun außer Eingriff steht und das Fahrzeug wieder frei für den Betrieb zur Verfügung steht. Befindet sich der Fahrer in einer Schocksituation, so wirken die veränderten Betriebsparameter des Parkhilfesystems daraufhin zu überwachen, ob der Fahrer wieder vollständige Kontrolle über das Fahrzeug hat. Ist dies nicht der Fall, erfolgt eine Warnung für den Fahrer. Die Warnung kann jedoch auch grundsätzlich erfolgen, wenn der erkannte automatische Bremseingriff beendet worden ist.

Die Verwendung eines Parkhilfesystems, insbesondere die Veränderung der Betriebsparameter eines Parkhilfesystems, eines Fahrzeugs bringt den weiteren Vorteil mit sich, dass es sich um ein Warnsystem handelt, welches dem Fahrer bekannt ist. Er muss sich also nicht an ein neues Warnsystem gewöhnen, sondern erhält vielmehr die Warnung durch ein Parkhilfesystem, welches ihm durch den regelmäßigen Betrieb des Fahrzeugs bekannt ist. So kann die Parkhilfewarnung zum Beispiel durch einen Piepston mit unterschiedlichen Intervallen ausgebildet sein. Dadurch, dass dem Fahrer der Warnton bekannt ist, kann er ohne zusätzliche Überlegungszeit, sozusagen reflexartig, reagieren und die Kollision mit einem Objekt auch im Schockzustand vermeiden.

Es kann von Vorteil sein, wenn bei einem erfindungsgemäßen Verfahren das Verändern der Betriebsparameter des Parkhilfesystems des Fahrzeugs beinhaltet, dass zumindest ein Warnabstand einer Warnstufe eines Parkhilfesystems des Fahrzeugs vergrößert wird, insbesondere um mehr als 50%, wobei der Warnabstand sich auf den Abstand des Fahrzeugs zu einem erfassten Objekt bezieht. Im Rahmen der vorliegenden Erfindung sind dabei insbesondere Objekte zu betrachten, welche in der Fahrtrichtung des Fahrzeugs vor diesem liegen. Dies sind insbesondere voranfahrende oder voranstehende Fahrzeuge auf der gleichen Fahrbahnspur. Die Vergrößerung des Warnabstandes hat zur Folge, dass das Parkhilfesystem einen Warnton als Parkhilfewarnung bereits zu einem Abstandszeitpunkt ertönen lässt, welcher bei normalem Betrieb des Parkhilfesystems noch nicht zu einer solchen Tonabgabe führen würde. Dabei können die Warnabstände unterschiedlichen Warnstufen zugeordnet sein, sodass je nach Warnstufe unterschiedliche Warntöne, die sich insbesondere hinsichtlich des Intervalls, also der Frequenz der Tonfolge, unterscheiden, ertönen. Vorteilhaft ist es, wenn sämtliche Warnabstände jeder Warnstufe des Warnhilfesystems entsprechend angepasst werden. Dies kann bei schrittweisen Warnstufen genauso vorgesehen sein, wie dies bei einem kontinuierlichen Warnstufensystem, also bei kontinuierlich veränderten Intervallen für den Warnton möglich ist.

Ebenfalls vorteilhaft kann es sein, wenn bei einem erfindungsgemäßen Verfahren zumindest ein erster Warnabstand und/oder ein Vollwarnabstand des Parkhilfesystems des Fahrzeugs vergrößert wird. Unter dem ersten Warnabstand ist dabei derjenige Warnabstand zu verstehen, bei dessen Unterschreiten der Warnton zum ersten Mal ausgesendet wird. Es kann dies auch als der Beginn des Gefahrenbereiches hinsichtlich des Abstands zwischen dem eigenen Fahrzeug und einem voranstehenden oder voranfahrenden Fahrzeug verstanden werden. Ein Vollwarnabstand im Rahmen der vorliegenden Erfindung ist der Abstand, bei welchem die Gefahr am Größten ist, dass eine Kollision erfolgt. Es handelt sich also um den kürzesten Abstand zwischen dem eigenen Fahrzeug und dem voranstehenden oder vorausfahrenden Fahrzeug für den das Parkhilfesystem die Parkhilfewarnung differenziert. Der Vollwarnabstand ist bei bekannten Parkhilfesystemen üblicherweise nicht mehr mit einem Intervallton, sondern viel mehr mit einem Dauerton korreliert. Zum Beispiel ist es möglich, dass der erste Warnabstand sich von 80 cm auf 160 cm oder sogar noch mehr vergrößert. Hinsichtlich des Vollwarnabstands ist es möglich, dass dieser von 30 cm auf 70 cm vergrößert wird. Selbstverständlich ist es auch möglich, dass die Vergrößerung sämtlicher Warnabstände gleichmäßig erfolgt, insbesondere eine Erhöhung um 50% oder sogar eine Verdopplung durchgeführt wird.

Ein weiterer Vorteil ist es, wenn bei einem erfindungsgemäßen Verfahren das Verändern der Betriebsparameter des Parkhilfesystems des Fahrzeugs beinhaltet, dass ein Warnton im Inneren des Fahrzeugs ertönt. Diese Ausführungsform korreliert mit bekannten Parkhilfesystemen, sodass kein neues Erlernen des Warnhinweises durch das Parkhilfesystem für den Fahrzeugführer notwendig ist. Vielmehr ist es auf diese Weise möglich, dass er ohne zusätzliches Überlegen reflexartig handelt und die manuelle Bremse betätigt um eine Kollision mit einem vorausstehenden oder vorausfahrenden Fahrzeug zu vermeiden. Insbesondere bei Fahrern, die unter einer erhöhten Stressbelastung nach einem automatischen Bremseingriff stehen oder die sich in einem Schockzustand befinden ist eine solche reflexartige Vermeidung der Kollision von großem Vorteil, da die Überlegungsprozesse zur Vermeidung der Kollision stark herabgesetzt sind.

Ebenfalls vorteilhaft ist es, wenn bei einem erfindungsgemäßen Verfahren das Verändern der Betriebsparameter des Parkhilfesystems des Fahrzeugs unterdrückt wird, wenn wenigstens eine der nachfolgenden Bedingungen erfüllt ist:
- Das Gaspedal ist betätigt,
- Das Bremspedal ist betätigt,
- Das Fahrzeug verbleibt nach Beendigung des erkannten automatischen Bremsvorganges im Stillstand oder im Wesentlichen im Stillstand.

Die voranstehende, nicht abschließende Liste ist als eine Bedingungsliste zu verstehen, welche verhindert, dass ein erfindungsgemäßes Verfahren durchgeführt wird, wenn es nicht benötigt wird. Es kann sozusagen interpretiert werden als eine Prüfungsbedingung, ob der Fahrer in der aktuellen Situation in der Lage ist das Fahrzeug zu führen oder ob keine Kollisionsgefahr aufgrund des Stillstandes des Fahrzeugs droht. Wird nach der Beendigung eines erkannten automatischen Bremseingriffes erkannt, dass das Bremspedal betätigt wird, so ist sichergestellt, dass eine nachfolgende Kollision unterbleiben wird, da der Fahrer aktiv die manuelle Bremse einsetzt. Wird das Gaspedal aktiv betätigt, so besteht der bewusste Wunsch des Fahrzeugführers das Fahrzeug wieder in Bewegung zu versetzen, er befindet sich also in einem ausreichend aktiven Zustand, um das Fahrzeug zu führen. Verbleibt das Fahrzeug nach Beendigung des erkannten automatischen Bremsvorganges im Stillstand oder im Wesentlichen im Stillstand, so ist auch keine nennenswerte Weiterbewegung vorhanden, die zu einer Kollision mit einem Objekt führen könnte. Der Ausschluss der Durchführung eines erfindungsgemäßen Verfahrens beim Eintreten einer voranstehend genannten Situation hat den Vorteil, dass es zum einen notwendige Ressourcen des Fahrzeugs nur in dem Erfordernisfall bindet, zum anderen den ordnungsgemäßen Betrieb des Fahrzeugs bei ausreichender Befähigung des Fahrzeugführers zur Kontrolle des Fahrzeugs nicht einschränkt.

Ein weiterer Vorteil ist es, wenn bei einem erfindungsgemäßen Verfahren das Verändern der Betriebsparameter des Parkhilfesystems des Fahrzeugs nur durchgeführt wird, wenn der erkannte automatische Bremsvorgang zum Stillstand oder nahezu zum Stillstand des Fahrzeugs geführt hat. Auf diese Weise kann ein erfindungsgemäßes Verfahren unterscheiden, ob es sich bei dem automatischen Bremseingriff um einen regulären Bremseingriff, zum Beispiel zum Halten eines Abstandes zu einem vorausfahrenden Fahrzeug, handelt oder ob eine Nothaltesituation eingetreten ist. Dies kann darüber hinaus korreliert werden mit der gemessenen negativen Beschleunigung durch den automatischen Bremseingriff. Insbesondere kann ein erfindungsgemäßes Verfahren damit verhindern, dass es im regulären Betrieb des Fahrzeugs, also unabhängig von Nothaltesituationen, unerwünscht die Kontrolle über das Fahrzeug einschränkt oder verändert. Zwischenbremsungen auf der Autobahn werden dementsprechend von einem erfindungsgemäßen Verfahren dieser Ausführungsform nicht berührt.

Ein weiterer Vorteil ist es, wenn bei einem erfindungsgemäßen Verfahren das Verändern der Betriebsparameter des Parkhilfesystems des Fahrzeugs nur für eine vordefinierte Zeitspanne, insbesondere für eine Zeitspanne von mindestens 10 Sekunden, nach Beendigung des erkannten automatischen Bremseingriffsdurchgeführt wird. Damit kann sichergestellt sein, dass nur während der Folgezeit des automatischen Bremseingriffs ein erfindungsgemäßes Verfahren durchgeführt wird. Die Zeitspanne hierfür wird vorzugsweise mit der üblichen Zeitspanne für den erhöhten Stressfaktor des Fahrers korrelieren. Insbesondere wird jedoch eine Mindestzeitspanne vorgegeben, um sicherzustellen, dass in dem direkten Anschluss an eine Nothaltesituation, also an das Erkennen der Beendigung des automatischen Bremseingriffs, ein erfindungsgemäßes Verfahren ausgeführt wird. Zusätzlich oder alternativ ist es möglich, dass das Verfahren sich nicht nur selbst nach Ablauf der Zeitspanne wieder ausschaltet, sondern dass der Fahrer selbst aktiv auf Normalbetrieb des Fahrzeugs umschalten kann.

Ein weiterer Gegenstand der vorliegenden Erfindung ist eine Vorrichtung für ein Fahrzeug aufweisend ein Parkhilfesystem, ein automatisches Bremssystem und eine mit diesem signalkommunizierend verbundene Regelvorrichtung, die ausgebildet ist ein erfindungsgemäßes Verfahren auszuführen. Dabei kann das Parkhilfesystem einer solchen Vorrichtung zumindest einen der folgenden Abstandssensoren aufweisen:
- Ultraschallsensor
- Videokamera
- Laserscanner

Eine erfindungsgemäße Vorrichtung kann ein erfindungsgemäßes Verfahren ausführen, sodass sie die gleichen Vorteile mit sich bringt, wie sie ausführlich für ein erfindungsgemäßes Verfahren erläutert worden sind.

Ebenfalls Gegenstand der vorliegenden Erfindung ist ein Fahrzeug aufweisend eine erfindungsgemäße Vorrichtung. Auch ein solches Fahrzeug bringt dementsprechend die gleichen Vorteile mit sich, die ausführlich hinsichtlich eines erfindungsgemäßen Verfahrens bereits erläutert worden sind. Die Sensoren des Parkhilfesystems überwachen dabei vorteilhafterweise den Bereich vor dem Fahrzeug in Bezug auf dessen Hauptfahrtrichtung.

### BEVORZUGTE AUSFÜHRUNGSBEISPIELE

Weitere, die Erfindung verbessernde Maßnahmen werden nachstehend gemeinsam mit der Beschreibung von bevorzugten Ausführungsbeispielen der Erfindung anhand der Figuren näher dargestellt. Die dabei verwendeten Begriffe "links", "rechts", "oben" und "unten" beziehen sich auf eine Ausrichtung der Zeichnungsfiguren mit normal lesbaren Bezugszeichen. Es zeigen:
- Figur 1: eine Ausführungsform eines erfindungsgemäßen Fahrzeugs in schematischer Darstellung,
- Figur 2: ein schematisches Diagramm für die Fahrzeuggeschwindigkeit über die Zeit mit einem automatischen Bremseingriff und
- Figur 3: die schematische Darstellung einer Ausführungsform zur Erhöhung der Warnabstände des Parkhilfesystems.

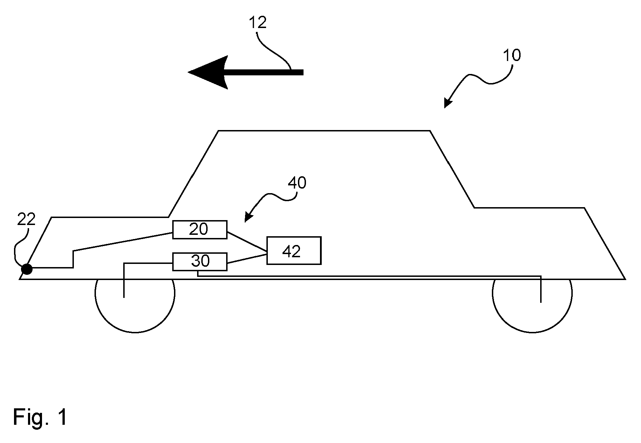

In Figur 1 ist eine Ausführungsform eines erfindungsgemäßen Fahrzeugs 10 dargestellt. Das Fahrzeug 10 weist eine erfindungsgemäße Vorrichtung 40 auf. Die Vorrichtung 40 umfasst ein Parkhilfesystem 20 und ein automatisches Bremssystem 30. Parkhilfesystem 20 und automatisches Bremssystem 30 sind in signalkommunizierender Weise mit einer Regelvorrichtung 42 verbunden. Darüber hinaus kann das automatische Bremssystem 30 über einen Steuerbefehl einen automatischen Bremseingriff auf das Fahrzeug 10 erzeugen. Das Parkhilfesystem 20 ist mit Abstandsensoren 22 versehen, die insbesondere den Bereich vor dem Fahrzeug in dessen Hautbewegungsrichtung 12 überwachen. Diese Abstandssensoren 22 sind bei dieser Ausführungsform als Ultraschallsensoren ausgebildet.

Eine erfindungsgemäße Vorrichtung 40 sowie ein erfindungsgemäßes Fahrzeug 10 kann durch ein Verfahren betrieben werden, wie es nachfolgend näher erläutert wird.

Wird durch die Regelvorrichtung 42 erkannt, dass das automatische Bremssystem 30 einen automatischen Bremseingriff durchgeführt hat, so kann anschließend ein Steuerbefehl an das Parkhilfesystem 20 ausgegeben werden, welcher die Betriebsparameter des Parkhilfesystems 20 verändert. Ein Ändern der Betriebsparameter kann dabei in unterschiedlicher Weise erfolgen und insbesondere von weiteren Faktoren abhängen. Die weiteren Faktoren können dabei zum Beispiel die Geschwindigkeit nach Beendigung des automatischen Bremseingriffes, die Betätigung der Pedalerie im Fahrzeug 10 durch den Fahrzeugführer oder ähnliches sein. Die Betriebsparameter werden dabei zum Beispiel hinsichtlich der Warnabstände des Parkhilfesystems 20, der Art und des Zeitpunkts der Wiedergabe eines Warntons oder aber dem grundsätzlichen Einschalten des Parkhilfesystems 20 verändert.

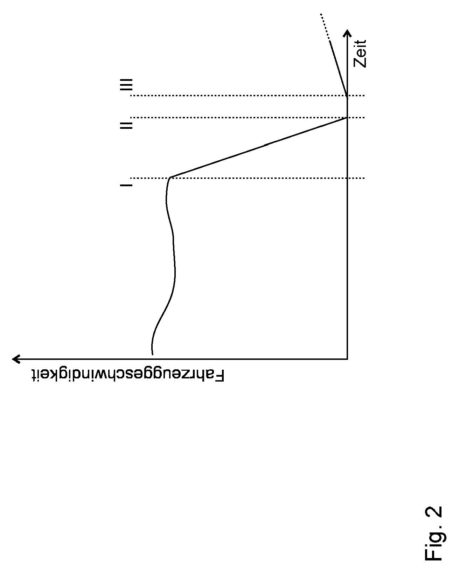

In Figur 2 ist ein Beispiel einer Betriebssituation eines Fahrzeugs 10 dargestellt. Bis zu dem Zeitpunkt, der mit I gekennzeichnet ist, führt der Fahrzeughalter das das Fahrzeug 10 vollständig selbst. Die Fahrzeuggeschwindigkeit variiert und hängt ausschließlich von der Betätigung des Gaspedals und des Bremspedals des Fahrzeugs ab.

Zum Zeitpunkt I hat die Sensorik des Fahrzeugs 10 einen automatischen Bremseingriff ausgelöst. Dieser überlagert die Steuerbefehle des Fahrers des Fahrzeugs 10 und bremst dieses relativ stark auf Null ab. Durch das Abbremsen auf Null und/oder die starke negative Beschleunigungsrate durch den automatischen Bremseingriff des automatischen Bremssystems 30 kann zum Beispiel auf eine Nothaltesituation geschlossen werden.

Der automatische Bremseingriff ist zum Zeitpunkt II in Figur 2 beendet. Das Fahrzeug 10 befindet sich zu diesem Zeitpunkt im Stillstand. Der Fahrer des Fahrzeugs 10 kann zu diesem Zeitpunkt unter Schock stehen oder zumindest einer erhöhten Stressbelastung ausgesetzt sein. Dieser Schockzustand oder die Stressbelastungen können über eine unbestimmte Zeitdauer andauern. Insbesondere dauern sie länger an, als sich das Fahrzeug 10 im Stillstand befindet.

Zum Zeitpunkt III in dem Diagramm der Figur 2 setzt sich das Fahrzeug 10 wieder in Bewegung. Dies kann zum einen daraus resultieren, dass das automatische Bremssystem 30 den Bremseingriff löst. Auch ist es möglich, dass zu diesem Zeitpunkt ein Schleppmoment des Fahrzeugs, zum Beispiel bei einem Automatikgetriebe, das Fahrzeug 10 wieder neu antreibt. Das Fahrzeug 10 setzt sich zu diesem Zeitpunkt also in Bewegung, was in Figur 2 durch einen Anstieg der Fahrzeuggeschwindigkeit zu erkennen ist. Befindet sich zu diesem Zeitpunkt der Fahrzeugführer des Fahrzeugs 10 noch nicht in der Lage die Kontrolle über das Fahrzeug 10 voll zu übernehmen, so besteht die Gefahr eines zumindest teilweise unkontrollierten Folgemanövers des Fahrzeugs 10.

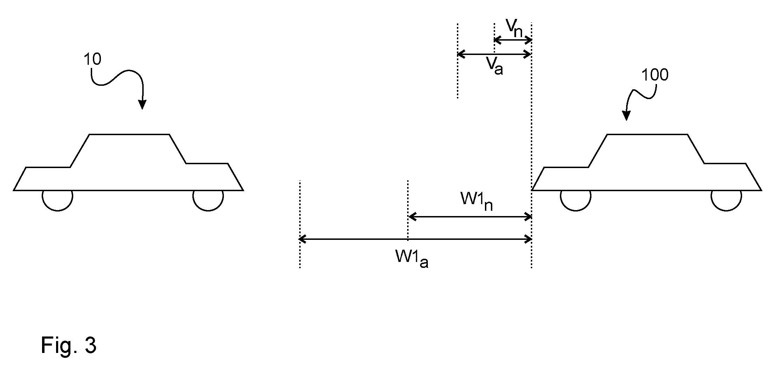

Durch das Verändern der Betriebsparameter des Parkhilfesystems 20 wird vermieden, dass ein unkontrolliertes Fahren erfolgt, beziehungsweise eine Kollision aufgrund einer solchen unkontrollierten Situation passieren kann. So ist es möglich, dass automatisch zum Zeitpunkt II und/oder zum Zeitpunkt III ein Warnton als Parkhilfewarnung des Parkhilfesystems ausgesendet wird, der den Fahrzeugführer daran erinnert, dass er nun wieder selbst die Kontrolle über das Fahrzeug 10 zu übernehmen hat. Auch ist es möglich, dass grundsätzlich das Parkhilfesystem 20 zu diesem Zeitpunkt eingeschaltet wird, obwohl dessen eigene Sensorik keine Notwendigkeit hierzu erkannt hat, da kein Einparkvorgang erfolgen soll. Eine dritte Möglichkeit ist es, dass, wie in Figur 3 nachfolgend erläutert, die Warnabstände des Parkhilfesystems 20 verändert werden.

Figur 3 zeigt eine solche Veränderung der Warnabstände zwischen einem Fahrzeug 10 und einem weiteren Fahrzeug 100, also einem vorausstehenden oder vorausfahrenden Fahrzeug 100. Mit den Indices "n" sind dabei die Warnabstände in normaler Betriebsweise des Parkhilfesystems 20 angedeutet. Der Vollwarnungsabstand Vₙ bezeichnet dabei den Abstand, welcher eingenommen wird, um einen vollständigen, insbesondere einen Dauerton, als Warnhinweis für den Fahrzeugführer zu erzeugen. Dieser Vollwarnabstand Vₙ wird bei ausgelöster Parkhilfewarnung, also beim Verändern der Betriebsparameter eines Parkhilfesystems vergrößert auf einen Vollwarnungsabstand Vₐ.

Alternativ oder zusätzlich zu dieser Änderung ist es möglich, dass auch andere Warnabstände, insbesondere der erste Warnabstand W1 verändert wird. So wird der erste Warnabstand ein Warnsignal auslösen, wenn er unterschritten wird. Solange der Abstand zwischen dem Fahrzeug 10 und dem vorausstehenden oder vorausfahrenden Fahrzeug 100 größer als der Abstand W1ₙ ist, wird das Parkhilfesystem 20 noch keinen Warnton aussenden. Durch ein erfindungsgemäßes Verfahren vergrößert sich dieser erste Warnabstand W1ₙ auf den neuen Warnabstand W1ₐ. Durch das Verändern der Betriebsparameter wird also das Parkhilfesystem 20 bereits zu einem früheren Zeitpunkt als normal mit dem ersten Warnton, also insbesondere einem besonders langsamen Intervall für einen Warnton, eine Warnung des Fahrzeugführers beginnen. Selbstverständlich kann auch eine Vielzahl von Zwischenstufen, insbesondere ein kontinuierlicher Verlauf der Warnabstände zwischen dem ersten Warnabstand W1 und dem Vollwarnungsabstand V durch das Verändern der Betriebsparameter eines erfindungsgemäßen Verfahrens durchgeführt werden.

## Patentansprüche

1. Verfahren zum Erhöhen der Sicherheit beim Betrieb eines Fahrzeugs (10) nach einem automatischen Bremseingriff, aufweisend die folgenden Schritte:
• Erkennen der Durchführung eines automatischen Bremseingriffs,
• Erkennen der Beendigung des automatischen Bremseingriffs,
**gekennzeichnet durch**
• Verändern der Betriebsparameter eines Parkhilfesystems (20) des Fahrzeugs (10), um unter Nutzung der Parkhilfewarnung eine nachfolgende Kollision mit einem Objekt zu vermeiden.

2. Verfahren nach Anspruch 1, **dadurch gekennzeichnet, dass** das Verändern der Betriebsparameter des Parkhilfesystems (20) des Fahrzeugs (10) beinhaltet, dass zumindest ein Warnabstand einer Warnstufe eines Parkhilfesystems (20) des Fahrzeugs (10) vergrößert wird, insbesondere um mehr als 50%, wobei der Warnabstand sich auf den Abstand des Fahrzeugs (10) zu dem Objekt bezieht.

3. Verfahren nach Anspruch 2, **dadurch gekennzeichnet, dass** zumindest ein erster Warnabstand und/oder ein Vollwarnabstand des Parkhilfesystems (20) des Fahrzeugs (10) vergrößert wird.

4. Verfahren nach einem der vorangegangenen Ansprüche, **dadurch gekennzeichnet, dass** das Verändern der Betriebsparameter des Parkhilfesystems (20) des Fahrzeugs (10) beinhaltet, dass ein Warnton im Inneren des Fahrzeugs (10) ertönt.

5. Verfahren nach einem der vorangegangenen Ansprüche, **dadurch gekennzeichnet, dass** das Verändern der Betriebsparameter des Parkhilfesystems (20) des Fahrzeugs (10) unterdrückt wird, wenn wenigstens eine der nachfolgenden Bedingungen erfüllt ist:
• Das Gaspedal ist betätigt,
• Das Bremspedal ist betätigt,
• Das Fahrzeug (10) verbleibt nach Beendigung des erkannten automatischen Bremsvorgangs im Stillstand oder im Wesentlichen im Stillstand.

6. Verfahren nach einem der vorangegangenen Ansprüche, **dadurch gekennzeichnet, dass** das Verändern der Betriebsparameter des Parkhilfesystems (20) des Fahrzeugs (10) nur durchgeführt wird, wenn der erkannte automatische Bremsvorgang zum Stillstand oder nahezu zum Stillstand des Fahrzeugs (10) geführt hat.

7. Verfahren nach einem der vorangegangenen Ansprüche, **dadurch gekennzeichnet, dass** das Verändern der Betriebsparameter des Parkhilfesystems (20) des Fahrzeugs (10) nur für eine vordefinierte Zeitspanne, insbesondere für eine Zeitspanne von mindestens 10 Sekunden, nach Beendigung des erkannten automatischen Bremsvorgangs durchgeführt wird.

8. Vorrichtung (40) für ein Fahrzeug (10) aufweisend ein Parkhilfesystem (20), ein automatisches Bremssystem (30) und eine mit diesen signalkommunizierend verbundene Regelvorrichtung (42), die ein Verfahren mit den Merkmalen eines der Ansprüche 1 bis 7 ausführt.

9. Vorrichtung (40) nach Anspruch 8, **dadurch gekennzeichnet, dass** das Parkhilfesystem (20) zumindest einen der nachfolgenden Abstandssensoren (22) aufweist:
• Ultraschallsensor
• Videokamera
• Laserscanner

10. Fahrzeug (10) aufweisend eine Vorrichtung (40) mit den Merkmalen eines der Ansprüche 8 oder 9.

## Claims

1. Method for increasing safety when operating a vehicle (10) after an automatic braking intervention, having the following steps:
• detecting the execution of an automatic braking intervention, and
• detecting the ending of the automatic braking intervention,
**characterized by**
• changing the operating parameters of a parking aid system (20) of the vehicle (10) in order to avoid a subsequent collision with an object by using the parking aid warning.

2. Method according to Claim 1, **characterized in that** the changing of the operating parameters of the parking aid system (20) of the vehicle (10) includes the fact that at least one warning distance of a warning stage of a parking aid system (20) of the vehicle (10) is made larger, in particular by more than 50%, wherein the warning distance relates to the distance of the vehicle (10) from the object.

3. Method according to Claim 2, **characterized in that** at least a first warning distance and/or a full warning distance of the parking aid system (20) of the vehicle (10) is made larger.

4. Method according to one of the preceding claims, **characterized in that** the changing of the operating parameters of the parking aid system (20) of the vehicle (10) includes the fact that a warning tone is issued in the interior of the vehicle (10).

5. Method according to one of the preceding claims, **characterized in that** the changing of the operating parameters of the parking aid system (20) of the vehicle (10) is suppressed if at least one of the following conditions is met:
• the accelerator pedal is activated,
• the brake pedal is activated, and
• the vehicle (10) remains in the stationary state or essentially in the stationary state after the ending of the detected automatic braking process.

6. Method according to one of the preceding claims, **characterized in that** the changing of the operating parameters of the parking aid system (20) of the vehicle (10) is only carried out if the detected automatic braking operation has brought the vehicle (10) to a standstill or virtually to a standstill.

7. Method according to one of the preceding claims, **characterized in that** the changing of the operating parameters of the parking aid system (20) of the vehicle (10) is carried out only for a predetermined time period, in particular for a time period of at least 10 seconds, after the ending of the detected automatic braking operation.

8. Device (40) for a vehicle (10) having a parking aid system (20), an automatic braking system (30) and a regulating device (42) which is connected in a signal-communicating fashion with said systems and which carries out a method having the features of one of Claims 1 to 7.

9. Device (40) according to Claim 8, **characterized in that** the parking aid system (20) has at least one of the following distance sensors (22):
• ultrasonic sensor
• video camera
• laser scanner.

10. The vehicle (10) having a device (40) having the features of one of Claims 8 or 9.

## Revendications

1. Procédé visant à augmenter la sécurité lors de l'utilisation d'un véhicule (10) après une intervention de freinage automatique, comprenant les étapes suivantes :
* détection de la réalisation d'une intervention de freinage automatique,
* détection de la fin de l'intervention de freinage automatique,
**caractérisé par**
* modification des paramètres de fonctionnement d'un système d'assistance au stationnement (20) du véhicule (10) afin d'éviter une collision ultérieure avec un objet en utilisant le système d'assistance au stationnement.

2. Procédé selon la revendication 1, **caractérisé en ce que** la modification des paramètres de fonctionnement d'un système d'assistance au stationnement (20) du véhicule (10) inclut le fait qu'au moins un écart d'alerte d'un niveau d'alerte d'un système d'assistance au stationnement (20) du véhicule (10) est augmenté, notamment de plus de 50 %, l'écart d'alerte se rapportant à l'écart entre le véhicule (10) et l'objet.

3. Procédé selon la revendication 2, **caractérisé en ce qu'**au moins un premier écart d'alerte et/ou un écart de préalerte du système d'assistance au stationnement (20) du véhicule (10) est augmenté.

4. Procédé selon l'une des revendications précédentes, **caractérisé en ce que** la modification des paramètres de fonctionnement du système d'assistance au stationnement (20) du véhicule (10) inclut le fait qu'un signal sonore d'alerte est émis à l'intérieur du véhicule (10).

5. Procédé selon l'une des revendications précédentes, **caractérisé en ce que** la modification des paramètres de fonctionnement du système d'assistance au stationnement (20) du véhicule (10) est inhibée lorsqu'au moins l'une des conditions suivantes est remplie :
* la pédale d'accélération est actionnée,
* la pédale de frein est actionnée,
* le véhicule (10) reste à l'arrêt ou au moins sensiblement à l'arrêt après la fin de l'opération de freinage automatique détectée.

6. Procédé selon l'une des revendications précédentes, **caractérisé en ce que** la modification des paramètres de fonctionnement du système d'assistance au stationnement (20) du véhicule (10) n'est effectuée que lorsque l'opération de freinage automatique détectée a mené à une immobilisation ou quasiment à une immobilisation du véhicule (10).

7. Procédé selon l'une des revendications précédentes, **caractérisé en ce que** la modification des paramètres de fonctionnement d'un système d'assistance au stationnement (20) du véhicule (10) n'est effectuée que pendant un intervalle de temps prédéfini, notamment pendant un intervalle de temps d'au moins 10 secondes après que l'opération de freinage automatique détectée soit terminée.

8. Dispositif (40) pour un véhicule (10) comprenant un système d'assistance au stationnement (20), un système de freinage automatique (30) et un dispositif de régulation (42) relié en communication de signaux avec ceux-ci, lequel met en oeuvre un procédé ayant les caractéristiques de l'une des revendications 1 à 7.

9. Dispositif (40) selon la revendication 8, **caractérisé en ce que** le système d'assistance au stationnement (20) possède au moins l'un des détecteurs de distance (22) suivants :
* détecteur à ultrason
* caméra vidéo
* système de balayage à laser.

10. Véhicule (10) équipé d'un dispositif (40) ayant les caractéristiques de l'une des revendications 8 ou 9.
